# EUROPEAN PATENT APPLICATION

(11) **EP 4 597 472 A1**
(43) Date of publication of application: **06.08.2025**
(21) Application number: 23871282.2
(22) Date of filing: 16.05.2023
(51) Int. Cl.: G08G 1/16, B60W 40/06

(54) **VEHICLE CONTROL DEVICE AND VEHICLE CONTROL METHOD**

(30) Priority: 28.09.2022 JP 2022154410
(71) Applicant: Astemo, Ltd., Tokyo 100-0004 (JP)
(72) Inventor: GABRIEL Daniel, Tokyo 100-8280 (JP); HORITA Yuki, Tokyo 100-8280 (JP); TOYODA Hidehiro, Hitachinaka-shi, Ibaraki 312-8503 (JP)
(74) Representative: Strehl & Partner mbB
(86) International application number: PCT/JP2023/018359
(87) International publication number: WO 2024/070036

(57) **Abstract**

To provide a vehicle control apparatus having a function capable of appropriately setting a traveling procedure for resuming traveling after a host vehicle performs an escaping action.

A vehicle control apparatus includes a candidate area determination unit 12 that determines a passable area 601, which is an area where a host vehicle 2 and an oncoming vehicle 600 around the host vehicle can pass each other, on a road where there is an area where the host vehicle 2 and the oncoming vehicle 600 cannot pass each other, an action plan determination unit 13 that determines an action plan indicating a sequence of action steps 602, 605 of the host vehicle 2, a trajectory generation unit 14 that generates a travel trajectory of the host vehicle 2 in the passable area, an action plan update unit 15 that can update the action plan based on a position of the oncoming vehicle 600 within the passable area 601 and a travel trajectory of the host vehicle generated by the trajectory generation unit 14, and a travel control unit 16 that controls travel of the host vehicle 2 according to the action plan.

## Description

### Technical Field

The present invention relates to a vehicle control apparatus and a vehicle control method, and more particularly to a vehicle control apparatus and a vehicle control method suitable for autonomous driving.

### Background Art

In recent years, there has been a demand for technology that enables cooperative traveling on narrow roads in order to realize comfortable and safe driving assistance and autonomous driving of vehicles. In particular, technology has been proposed that enables a vehicle to cooperatively pass an oncoming vehicle by using a space to which the vehicle can escape when encountering the oncoming vehicle on a narrow road.

For example, JP2018-151177A (PTL 1) discloses a vehicle control apparatus that includes a map generation unit that generates map data around a vehicle and updates map data in accordance with movement of the vehicle, and an escaping space detection unit that detects an escaping space to which the vehicle can escape based on the map data, and generates escaping space information, which is information about a detected escaping space and is used to set an escaping route for the vehicle to escape in order to pass an oncoming vehicle.

In addition, JP2019-53646A (PTL 2) discloses a vehicle control apparatus that includes a recognition unit that recognizes road environment including other vehicles present around a host vehicle and escaping spaces around the host vehicle, a passing vehicle determination unit that determines whether there is a specific other vehicle that will pass the host vehicle on a one-lane road among the other vehicles recognized by the recognition unit, and an escaping necessity determination unit that determines whether it is necessary for the host vehicle or the specific other vehicle to move to the escaping space based on the road environment, for the specific other vehicle determined to exist by the passing vehicle determination unit.

### Citation List

### Patent Literature

PTL 1: JP2018-151177A
PTL 2: JP2019-53646A

### Summary of Invention

### Technical Problem

Incidentally, the vehicle control apparatus described in PTL 1 searches for a wide escaping space in a narrow road environment in which an oncoming vehicle can pass the host vehicle, and uses that space to take turns traveling with the oncoming vehicle to allow the host vehicle and the oncoming vehicle to pass each other. The vehicle control apparatus described in PTL 2 determines a traveling action of which one of the host vehicle and the oncoming vehicle should wait, based on the oncoming vehicle's traveling speed and its relative position to the host vehicle.

However, the vehicle control apparatuses in PTLs 1 and 2 do not describe a specific method for determining a traveling action plan and updating a traveling procedure for resuming traveling after the host vehicle performs an escaping action. Therefore, there is a need for an appropriate method for updating a traveling procedure for resuming traveling after the host vehicle performs an escaping action.

An object of the invention is to provide a vehicle control apparatus and a vehicle control method that are provided with a function for appropriately setting a traveling procedure for resuming traveling after a host vehicle performs an escaping action.

### Solution to Problem

According to the invention,
a vehicle control apparatus includes,
a candidate area determination unit that determines a passable area, which is an area where a host vehicle and a moving object around the host vehicle can pass each other, on a road where there is an area where the host vehicle and the moving object cannot pass each other.
an action plan determination unit that determines an action plan indicating a sequence of action steps of the host vehicle,
a trajectory generation unit that generates a travel trajectory of the host vehicle in the passable area,
an action plan update unit that can update the action plan based on a position of the moving object within the passable area and a travel trajectory of the host vehicle generated by the trajectory generation unit, and
a travel control unit that controls travel of the host vehicle according to the action plan.

Further, according to the invention,
in a vehicle control apparatus that sets a traveling action when a host vehicle travels along a narrow road on which the host vehicle and an oncoming vehicle cannot travel in opposite directions at the same time,
the vehicle control apparatus includes at least,
a candidate area determination unit that determines a passable area that exists on the narrow road and is an area where the host vehicle and the oncoming vehicle can pass each other,
an action plan determination unit that sets the traveling action of the host vehicle and determines an action plan including a plurality of action steps in which an execution order of the traveling action is set,
a travel trajectory generation unit that generates a travel trajectory of the host vehicle from the host vehicle to the passable area and beyond the passable area,
an action plan update unit that updates the action step up to the passable area to the action step beyond the passable area when a first condition that the oncoming vehicle is present in the passable area and a second condition that the travel trajectory of the host vehicle beyond the passable area can be generated are satisfied by execution of the action steps, and
a travel control unit that performs the travel action of the host vehicle according to the updated action step.

### Advantageous Effects of Invention

According to the invention, it is possible to provide a vehicle control apparatus having a function of appropriately setting a traveling procedure for resuming traveling after a host vehicle performs an escaping action.

### Brief Description of Drawings

[Fig. 1] Fig. 1 is a functional block diagram illustrating a configuration of a vehicle system to which the invention is applied.
[Fig. 2] Fig. 2 is an explanatory diagram illustrating a relationship between control functions of a vehicle control apparatus according to the embodiment of the invention.
[Fig. 3a] Fig. 3a is an explanatory diagram illustrating an example of a cooperative action plan of an action plan data group.
[Fig. 3b] Fig. 3b is an explanatory diagram illustrating an example of an own vehicle action plan of the action plan data group.
[Fig. 4a] Fig. 4a is an explanatory diagram illustrating an example (one location) of a candidate area data group.
[Fig. 4b] Fig. 4b is an explanatory diagram illustrating an example (two locations) of the candidate area data group.
[Fig. 5] Fig. 5 is a flowchart illustrating processing contents of the action plan update unit illustrated in Fig. 2.
[Fig. 6a] Fig. 6a is an explanatory diagram illustrating a first half of an action plan update process of the action plan update unit in a first operation example (general situation).
[Fig. 6b] Fig. 6b is an explanatory diagram illustrating a second half of the action plan update process of the action plan update unit in the first operation example (general situation).
[Fig. 7] Fig. 7 is an explanatory diagram illustrating an action plan update process of the action plan update unit in a second operation example (unexpected situation).
[Fig. 8a] Fig. 8a is an explanatory diagram illustrating an action plan update process of the action plan update unit in a first scene in which the action plan is not updated.
[Fig. 8b] Fig. 8b is an explanatory diagram illustrating the action plan update process of the action plan update unit in the first scene in which the action plan is not updated.
[Fig. 9a] Fig. 9A is an explanatory diagram illustrating an action plan update process of the action plan update unit in a first scene in which a plurality of passable area candidates exist.
[Fig. 9b] Fig. 9b is an explanatory diagram illustrating a second half of the action plan update process of the action plan update unit in a second scene in which a plurality of passable area candidates exist.

### Description of Embodiments

Hereinafter, an embodiment of the invention will be described in detail with reference to drawings. However, the invention is not limited to the following embodiment, and various modification examples and application examples within technical concept of the invention are also included within its scope.

### [Description of Overall System Configuration]

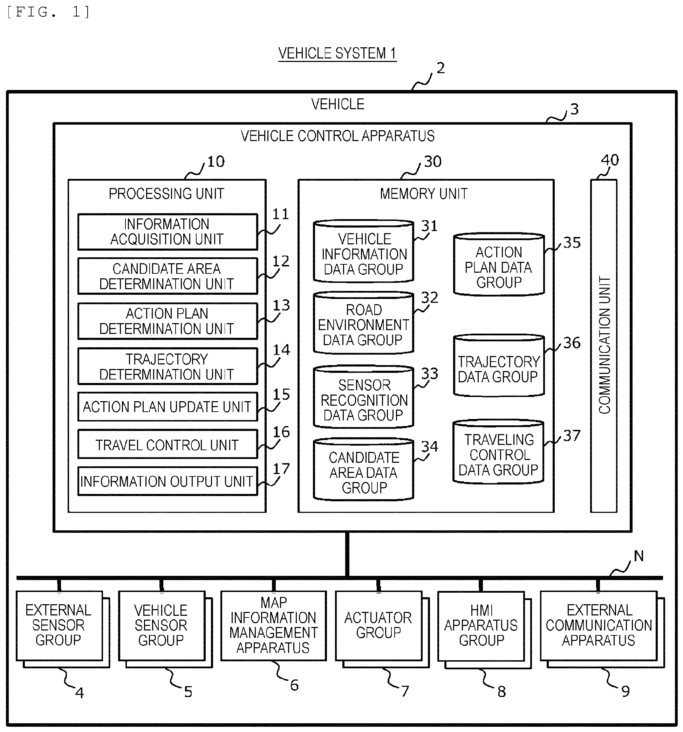

Fig. 1 is a functional block diagram illustrating a configuration of a vehicle system 1 including a vehicle control apparatus 3 according to the embodiment of the invention.

The vehicle system 1 is installed in a vehicle 2, and has the function of providing appropriate driving assistance and traveling control after confirming condition of a road around the vehicle 2 and obstacles such as surrounding vehicles.

As illustrated in Fig. 1, the vehicle system 1 is configured to include a vehicle control apparatus 3, an external sensor group 4, a vehicle sensor group 5, a map information management apparatus 6, an actuator group 7, an HMI apparatus group 8, and an external communication apparatus 9. The vehicle control apparatus 3, the external sensor group 4, the vehicle sensor group 5, the map information management apparatus 6, the actuator group 7, the HMI apparatus group 8, and the external communication apparatus 9 are connected to each other by an in-vehicle network N.

The external sensor group 4, the vehicle sensor group 5, the map information management apparatus 6, the actuator group 7, the HMI apparatus group 8, and the external communication apparatus 9 will be described in detail below. In the following, the vehicle 2 may be referred to as a "host vehicle" to distinguish it from other vehicles.

The vehicle control apparatus 3 is an Electronic Control Unit (ECU) mounted on the vehicle 2, and this vehicle control apparatus 3 generates traveling control information for driving assistance or automatic driving of the vehicle 2 based on various input information provided from the external sensor group 4, the vehicle sensor group 5, the map information management apparatus 6, the external communication apparatus 9, and the like, and outputs it to the actuator group 7 and the HMI apparatus group 8. The vehicle control apparatus 3 has a processing unit 10, a memory unit 30, and a communication unit 40.

The processing unit 10 is configured to include, for example, a Central Processing Unit (CPU), which is a central processing unit. However, in addition to the CPU, the processing unit 10 may also include a Graphics Processing Unit (GPU), a Field-Programmable Gate Array (FPGA), an Application Specific Integrated Circuit (ASIC), and the like, or may be configured with just one of them.

The processing unit 10 has, as control functions, an information acquisition unit 11, a candidate area determination unit 12, an action plan determination unit 13, a trajectory determination unit 14, an action plan update unit 15, a travel control unit 16, and an information output unit 17. The processing unit 10 can realize these functions by executing a predetermined control program stored in the memory unit 30.

The information acquisition unit 11 acquires various information from other apparatuses connected to the vehicle control apparatus 3 via the in-vehicle network N, and stores the information in the memory unit 30.

For example, information related to the behavior of the vehicle 2, such as the movement and state, detected by the vehicle sensor group 5, or the like, is obtained and stored in the memory unit 30 as a vehicle information data group 31. In addition, information related to the road environment on which the vehicle 2 is traveling is obtained from the map information management apparatus 6, the external communication apparatus 9, and the like, and stored in the memory unit 30 as a road environment data group 32. In addition, information related to obstacles around the vehicle 2 detected by the external sensor group 4 and a detection area of the external sensor group 4 is obtained and stored in the memory unit 30 as a sensor recognition data group 33.

Based on the sensor recognition data group 33 acquired by the information acquisition unit 11, the candidate area determination unit 12 determines a passable area (corresponding to an escaping space) in which the host vehicle and a moving object (for example, another vehicle, hereinafter specifically referred to as an oncoming vehicle) can pass by traveling together in opposite directions on a road where there is an area where passing of both vehicles is not possible. The moving object is not limited to other vehicles, and various moving objects exist. For example, this includes bicycles, carts, and the like.

A passable area is, for example, a road area that is wide enough to allow at least the host vehicle and an oncoming vehicle to pass each other. Since there may be a plurality of passable areas on an impassable road, the candidate area determination unit 12 can specify a plurality of passable areas.

Further, when high-precision map information of the surrounding environment managed by the map information management apparatus 6 includes escaping information such as passable areas, the information on the passable areas may be obtained by referring to the high-precision map information.

Further, for example, even on narrow roads where there are no oncoming vehicles, a search for passable areas may be performed and the information on the passable areas may be stored in advance, assuming that an oncoming vehicle will be detected in the future. Then, when an oncoming vehicle to be passed appears in the future, the information on the passable areas stored in advance may be referenced and specified as a candidate for the passable area. In this way, the calculation time can be shortened. Information about the passable areas determined by the candidate area determination unit 12 is stored in the memory unit 30 as a candidate area data group 34.

The action plan determination unit 13 determines an oncoming vehicle that is to be a target for cooperative action around the host vehicle based on each of the vehicle information data group 31, the road environment data group 32, and the sensor recognition data group 33 which are obtained by the information acquisition unit 11, and the candidate area data group 34 determined by the candidate area determination unit 12, and determines a traveling action plan for executing cooperative traveling action with the oncoming vehicle.

For example, when the host vehicle faces an oncoming vehicle on a narrow road and passing each other is required, the oncoming vehicle is determined as a target vehicle for the cooperative traveling action, and the cooperative traveling action is planned based on respective positional relationships between a position of the host vehicle, a position of the oncoming vehicle, and a position of the passable area included in the candidate area data group 34. The traveling action plan may also be determined by referring to a database in which several patterns of positional relationships between the host vehicle, the oncoming vehicle, and the passable area are determined in advance. In this way, the "traveling action plan" represents the traveling action of how the host vehicle will be driven, taking into account the driving of the host vehicle and the oncoming vehicle.

Here, a traveling action plan is composed of a combination of a plurality of consecutive "action steps". These action steps represent the traveling actions of the host vehicle to a specified location, or to a location where a specified event occurs. Therefore, the entire traveling action plan can be executed by updating and executing these action steps in order.

By designating an action step, a control program associated with the action step is executed, and traveling control is performed so that the host vehicle travels along a pre-calculated traveling trajectory.

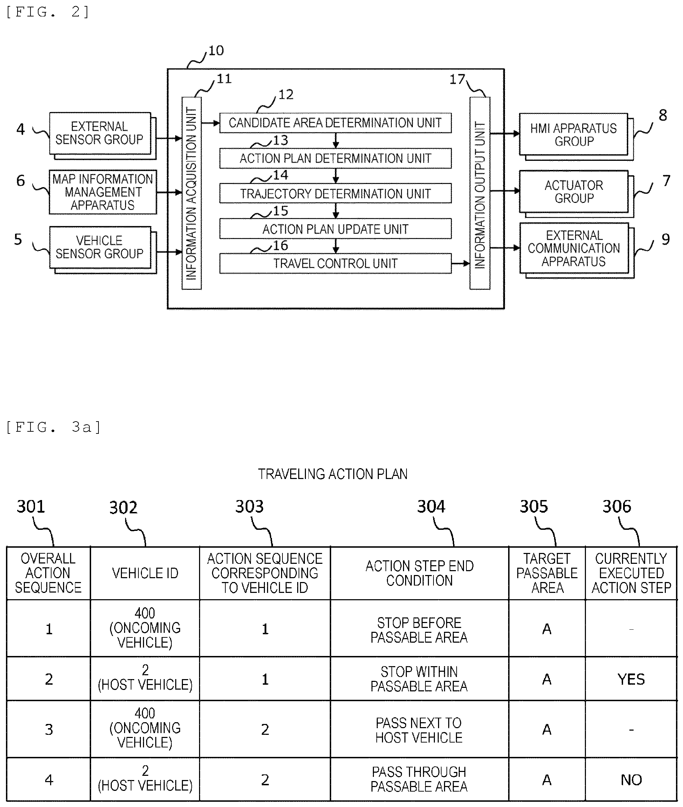

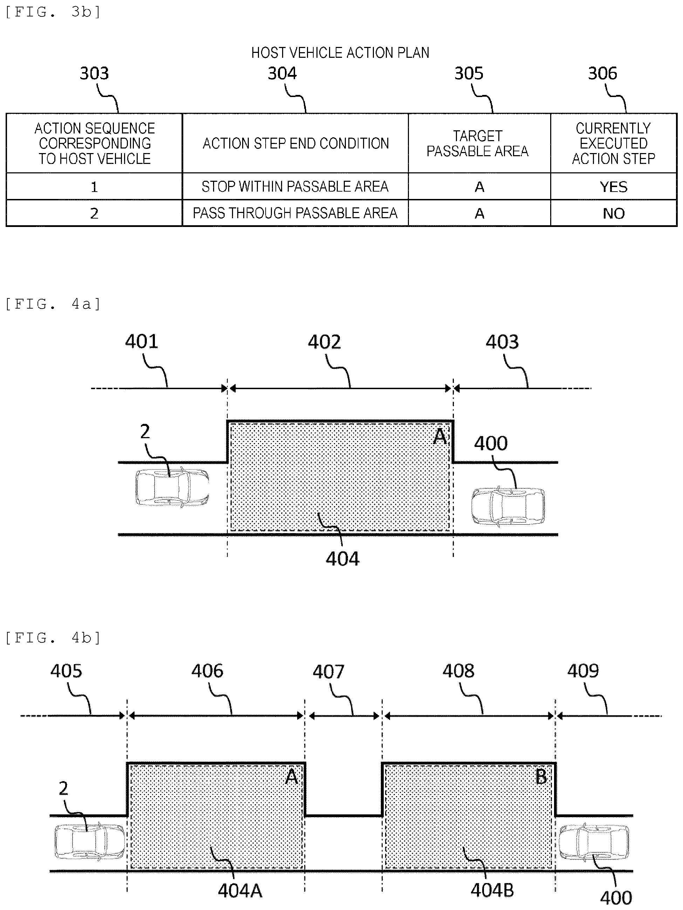

Further, the traveling action plan preferably consists of a planned traveling action of the host vehicle and a predicted traveling action of the oncoming vehicle. This will be described in Fig. 3. The host vehicle and the oncoming vehicle each execute their planned traveling actions for each action step, thereby eliminating events that cause difficult traveling situations, such as passing each other on a narrow road. This embodiment relates to a traveling action plan for the host vehicle, so the following description will focus on the host vehicle.

Here, it is particularly necessary for the host vehicle to execute the action steps of the traveling action plan in order and update the action steps. As an update condition for this action step, an action step end condition indicating achievement of the action step being executed can be set. For example, a specific location or specific area that the host vehicle needs to reach in order to achieve the action step can be set. In this embodiment, the action step is updated by determining this end condition. In addition, the end condition for each action step of the oncoming vehicle's traveling action plan may be predicted and set.

In addition, when a plurality of passable areas are stored in the candidate area data group 34, a target passable area can be determined based on the position of the host vehicle, the position of an oncoming vehicle, and the positions of the plurality of passable areas, and a driving action plan can be created. The traveling action plan created by the action plan determination unit 13 is stored in the memory unit 30 as an action plan data group 35.

The trajectory determination unit 14 generates a traveling trajectory for realizing the traveling action plan of the host vehicle based on the vehicle information data group 31 and the sensor recognition data group 33 acquired by the information acquisition unit 11, the candidate area data group 34 determined by the candidate area determination unit 12, and the action plan data group 35 determined by the action plan determination unit 13.

The traveling trajectory is a traveling trajectory planned so as not to collide with obstacles, for example, based on moving object information included in the sensor recognition data group 33 and surrounding obstacle information expressed by an OGM or the like. For example, a trajectory to a destination or the like that achieves the end condition of each action step included in the traveling action plan of the own vehicle may be generated. Therefore, by connecting the traveling trajectories in each action step, it is possible to perform autonomous driving by driving the own vehicle along the traveling trajectory.

Here, the trajectory determination unit 14 always generates a traveling trajectory for each action step of the traveling action plan of the host vehicle. For example, as illustrated in Fig. 3, when the traveling action plan of the host vehicle is composed of two action steps, a traveling trajectory from a current position of the host vehicle to a position where the end condition of the first action step is satisfied is generated, and a traveling trajectory from the current position of the host vehicle to a position where the end condition of the second action step is satisfied is generated.

This is because, when the action step being executed is updated midway, the traveling trajectory corresponding to the updated action step is selected and the traveling trajectory is followed. The trajectory information generated by the trajectory determination unit 14 is stored in the memory unit 30 as a trajectory data group 36.

The action plan update unit 15 determines whether the currently executed action step in the host vehicle's traveling action plan should be updated to another next action step based on the sensor recognition information data group 33 acquired by the information acquisition unit 11, the candidate area data group 34 determined by the candidate area determination unit 12, the action plan data group 35 determined by the action plan determination unit 13, and the trajectory data group 36 generated by the trajectory determination unit 14, and when it is determined that an update should be made, updates to the next action step.

In this embodiment, the decision as to whether to update is made based on the respective positional relationship information between the position of the oncoming vehicle and the position of the passable area, and establishment of the travel trajectory information of the next action step of the host vehicle. Specifically, when the following conditions are met:
(1) An oncoming vehicle is present within the passable area, and
(2) A traveling trajectory corresponding to an action step other than the currently executed action step of the host vehicle is correctly (without colliding with the oncoming vehicle or other obstacles, or the like) generated, then the traveling action plan is determined to be updated so as to execute an action step corresponding to a generatable traveling trajectory.

As described above, this update decision does not depend on the action steps planned by the oncoming vehicle, so the following description will focus on the action plan of the host vehicle. However, when the traveling intention of the oncoming vehicle can be predicted with high accuracy, for example, when the action steps of the oncoming vehicle are obtained through vehicle-to-vehicle communication, that predicted information can be used to determine whether to update the traveling action plan.

Further, the updating of the traveling action plan can be based on the respective positional relationships between the oncoming vehicle, the host vehicle, and the passable areas in addition to the currently executed traveling action plan of the host vehicle, and can also change only the target passable area of the action step without changing the traveling action plan of the host vehicle.

When it is determined that the action plan should be updated, the currently executed action step of the host vehicle is updated to the new action step. The action plan information updated by the action plan update unit 15 is overwritten and stored as the action plan data group 35 already existing in the memory unit 30.

The travel control planning unit 16 determines control command values for the actuator group 7 to control the traveling of the host vehicle to follow the traveling trajectory, based on the action plan data group 35 planned by the action plan determination unit 13 and updated by the action plan update unit 15, and the trajectory data group 36 generated by the trajectory determination unit 14. Information on the planned trajectory determined by the travel control planning unit 16 and the control command values for the actuator group 7 are stored in the memory unit 30 as a traveling control data group 37.

The information output unit 17 outputs various information to other apparatuses connected to the vehicle control apparatus 3 via the in-vehicle network N. For example, the information output unit 17 outputs a control command value included in the traveling control data group 37 to the actuator group 7 to control the traveling of the host vehicle.

In addition, for example, the sensor recognition data group 33, the action plan data group 35, the planned trajectory included in the trajectory data group 36, and the like are output to the HMI apparatus group 8 and presented to an occupant of the host vehicle. This makes it possible to present to the occupant how the vehicle system 1 interprets (display of the sensor recognition data group 33) the surrounding traveling environment and what kind of traveling it is planning (display of the action plan data group 35 and the action plan and trajectory of the trajectory data group 36) in the host vehicle during autonomous driving.

The memory unit 30 is configured to include, for example, storage apparatuses such as a Hard Disk Drive (HDD), a flash memory, and a Read Only Memory (ROM), as well as memories such as a Random Access Memory (RAM). The memory unit 30 stores programs processed by the processing unit 10 and data groups necessary for that processing. The memory unit 30 is also used as a main memory when the processing unit 10 executes a program, and to temporarily store data necessary for the program's calculations.

In this embodiment, as information for realizing the functions of the vehicle control apparatus 3, the vehicle information data group 31, the road environment data group 32, the sensor recognition data group 33, the candidate area data group 34, the action plan data group 35, the trajectory data group 36, the traveling control data group 37, and the like are stored in the memory unit 30.

The vehicle information data group 31 is a collection of data related to the behavior of the host vehicle detected by the vehicle sensor group 5 or the like. Data related to the behavior of the host vehicle is information that indicates the movement, state, and the like of the host vehicle, and includes information such as the host vehicle's position, traveling speed, steering angle, accelerator operation amount, brake operation amount, and traveling route.

The road environment data group 32 is a collection of data related to the road environment around the own vehicle. Data related to the road environment is information about the roads around the host vehicle, including the road on which the host vehicle is traveling.

This includes, for example, information on the shape and attributes (direction of travel, speed limit, driving regulations, and the like) of lanes that make up the roads around the host vehicle, traffic light information, traffic information on the traffic conditions (average speed, and the like) of each road and lane, statistical knowledge information based on past cases, and the like. Static information such as the shape and attributes of roads and lanes is included in map information acquired from, for example, the map information management apparatus 6 or the like.

On the other hand, semi-dynamic or dynamic information such as traffic signal information, traffic information, and statistical knowledge information is acquired via the external communication apparatus 9. Statistical knowledge information includes, for example, information on geographical locations and time periods where accidents are frequent, and the types of accidents.

The sensor recognition data group 33 is a collection of data related to detection information or detection state by the external sensor group 4. The detection information is, for example, information related to environmental elements such as obstacles, road markings, signs, and traffic lights around the vehicle 2 that the external sensor group 4 has specified based on its sensing information, or the sensing information itself (point cloud information from LiDAR or RADAR, camera images, disparity images from stereo cameras, and the like) around the host vehicle by the external sensor group 4. The detection state is information indicating the area detected by the sensor and its accuracy, and includes, for example, a grid map such as an OGM.

The candidate area data group 34 is a collection of area candidates that the host vehicle and the moving object can pass through on impassable roads determined by the candidate area determination unit 12. The area candidates may include, for example, spaces to which the host vehicle, an oncoming vehicle, or both vehicles can escape. The area candidates may be determined, for example, based on characteristics of the surrounding environment detected by the external sensor group 4, or may be obtained directly from high-precision map information when it is included therein.

In order to maintain consistency between the characteristics of the surrounding environment, which are relative information, and the map information, which are geographic coordinates, the information may be stored, for example, in a relative coordinate system with respect to the host vehicle, or in an absolute coordinate system such as geographic coordinates.

For example, when passable area candidates are stored in advance and the passable area is determined by inheriting past traveling experience information like an experience value map, it is desirable to store them in a geographic coordinate system. The area characteristics include at least the area identifier, position information, depth width, width, and inclination information. The area characteristics may further include information such as the upper height limit and the corresponding lane identifier.

The action plan data group 35 is action plan information including a traveling action plan for the host vehicle determined by the action plan determination unit 13. The action plan information is, for example, the action steps to be executed and the order of those steps to resolve the occurrence of a difficult traveling situation, such as the host vehicle and an oncoming vehicle currently passing each other.

The host vehicle's traveling action plan refers to the action steps included in the traveling action plan that apply only to the host vehicle. As described above, action steps refer to the traveling actions of the host vehicle that are executed in sequence and are included in the traveling action plan, the host vehicle action plan, and the like. The specific content of the data related to the action plan data is described in Fig. 3.

The trajectory data group 36 is a collection of data related to traveling trajectory information for controlling the traveling of the host vehicle, determined by the trajectory determination unit 14. The trajectory data group includes a plurality of pieces of trajectory information, in which traveling trajectories are generated for each action step of the traveling action plan of the host vehicle.

The traveling control data group 37 is a data group determined by the trajectory determination unit 14 for tracking the travel trajectory for the action step currently being executed in the host vehicle's traveling action plan, and includes control command values to be output to the actuator group 7 of the host vehicle. The information in the traveling control data group 37 is generated and stored by the travel control unit 16.

The communication unit 40 has a communication function with other apparatuses connected via the in-vehicle network N. The communication function of the communication unit 40 is used when the information acquisition unit 11 acquires various information from other apparatuses via the in-vehicle network N, or when the information output unit 17 outputs various information to other apparatuses via the in-vehicle network N.

The communication unit 40 is configured to include a network card conforming to communication standards such as IEEE 802.3 and CAN (Controller Area Network). The communication unit 40 transmits and receives data between the vehicle control apparatus 3 and other apparatuses in the vehicle system 1 based on various protocols.

In this embodiment, the communication unit 40 and the processing unit 10 are described separately, but part of the processing of the communication unit 40 may be executed in the processing unit 10. For example, a configuration may be adopted in which the equivalent of a hardware device in communication processing exists in the communication unit 40, and other device drivers, communication protocol processing, and the like exist in the processing unit 10.

The external sensor group 4 is a collection of apparatuses that detect the conditions around the host vehicle. Examples of the external sensor group 4 include camera apparatuses, millimeter wave radar, LiDAR, sonar, and the like. The external sensor group 4 detects environmental elements such as visible obstacles, road markings, signs, traffic lights, and the like within a predetermined range from the host vehicle, and these detection results are output to the vehicle control apparatus 3 via the in-vehicle network N.

Examples of "visible obstacles" include other vehicles other than the host vehicle, pedestrians, objects that have fallen onto the road, road edges, and the like. Examples of "road markings" include white lines, pedestrian crossings, stop lines, and the like. In addition, the external sensor group 4 outputs information regarding the detection state to the vehicle control apparatus 3 via the in-vehicle network N based on its own sensing range and status.

The vehicle sensor group 5 is a collection of apparatuses that detect various conditions of the host vehicle. Each vehicle sensor detects, for example, the position information, driving speed, steering angle, accelerator operation amount, brake operation amount, and the like of the vehicle 2, and outputs this information to the vehicle control apparatus 3 via the in-vehicle network N.

The map information management apparatus 6 is an apparatus that manages and provides digital map information about the surroundings of the host vehicle. The map information management apparatus 6 is, for example, composed of a navigation apparatus. The map information management apparatus 6 is, for example, provided with digital road map data of a predetermined area including the surroundings of the host vehicle, and is configured to specify the current position of the host vehicle on a map, that is, the road and lane on which the host vehicle is traveling, based on the host vehicle position information and the like output from the vehicle sensor group 5. The specified current position of the host vehicle and map data about the surroundings are output to the vehicle control apparatus 3 via the in-vehicle network N.

The actuator group 7 is a group of apparatuses that control control elements such as steering, braking, and accelerating that determine the movement of the host vehicle. The actuator group 7 controls the movement of control elements such as steering, braking, and accelerating based on operation information of the steering wheel, brake pedal, accelerator pedal, and the like by a driver and control command values output from the vehicle control apparatus 3, thereby controlling the behavior of the host vehicle and performing autonomous driving.

The HMI apparatus group 8 is a group of apparatuses for inputting information from the driver and occupants to the vehicle system 1 and notifying the driver and occupants of information from the vehicle system 1. The HMI apparatus group 8 includes a display, a speaker, a vibrator, a switch, and the like.

The external communication apparatus 9 is a communication module that performs wireless communication with the outside of the vehicle system 1. The external communication apparatus 9 is configured to be able to communicate with, for example, a center system (not illustrated) that provides and distributes services to the vehicle system 1 and the Internet.

### [Description of Vehicle System Operation]

Next, operation of the vehicle system 1 of this embodiment will be described with reference to Figs. 2 to 9.

Based on information obtained from the external sensor group 4, or the like, the vehicle control apparatus 3 determines the host vehicle's traveling action plan, as well as the passable area and traveling trajectory for making an update decision for the action steps, and updates the host vehicle's current action steps as necessary based on the results of the update decision.

Then, using the traveling trajectory for executing the currently executed action step, a control command value for controlling the traveling of the host vehicle is generated and output to the actuator group 7. The actuator group 7 controls each actuator of the host vehicle according to the control command value output by the vehicle control apparatus 3. This realizes traveling control of the host vehicle.

Further, the vehicle control apparatus 3 generates HMI information to be notified to the driver and occupants when controlling the traveling of the host vehicle, and outputs it to the HMI apparatus group 8. This makes it possible to present the status of the vehicle system 1 during autonomous driving to the driver and occupants.

Fig. 2 is a diagram illustrating the correlation of functions realized by the vehicle control apparatus 3. The vehicle control apparatus 3 is configured, for example, so that the processes of the information acquisition unit 11, candidate area determination unit 12, action plan determination unit 13, trajectory determination unit 14, action plan update unit 15, travel control unit 16, and information output unit 17 illustrated in Fig. 1 are executed in the order illustrated in Fig. 2. The series of processes is executed periodically by time interruption, for example, every 100 ms.

The information acquisition unit 11 acquires necessary information from other apparatuses via the in-vehicle network N and stores it in the memory unit 30. Specifically, it acquires information of the vehicle information data group 31 from the vehicle sensor group 5, information of the road environment data group 32 from the map information management apparatus 6 and the external communication apparatus 9, and information of the sensor recognition data group 33 from the external sensor group 4, stores this information in the memory unit 30, and passes it on to the subsequent candidate area determination unit 12.

The candidate area determination unit 12 specifies candidates for passable areas in the narrow road around the host vehicle based on information from the sensor recognition data group 33 and the road environment data group 32, stores the candidates in the memory unit 30, and further passes the information on the passable areas to the action plan determination unit 15.

The action plan determination unit 13 performs processing to generate a traveling action plan for resolving a current difficult traveling situation, such as passing each other, based on each of the information in the vehicle information data group 31, the road environment data group 32, the sensor recognition data group 33, and the candidate area data group 34, stores the plan in the memory unit 30, and then passes it to the trajectory determination unit 14 together with the candidate area data group 34.

The trajectory determination unit 14 performs processing to generate trajectories for a plurality of action steps that constitute the host vehicle's traveling action plan based on each of the information in the vehicle information data group 31, the sensor recognition data group 33, the candidate area data group 34, and the action plan data group 35, stores the trajectories in the memory unit 30, and further passes them to the action plan update unit 15 together with the candidate area data group 34 and the action plan data group 35.

The action plan update unit 15 performs a determination process as to whether to update the action plan of the host vehicle based on each of the information in the sensor recognition information data group 33, the candidate area data group 34, the action plan data group 35, and the trajectory data group 36, and updates the action plan data group 35 already stored in the memory unit 30.

This update involves updating the currently executed action step and the next action step to be executed, and involves canceling the currently executed action step and executing the next action step instead. In this case, the trajectory data for the currently executed action step included in the host vehicle action plan is also passed to the travel control unit.

The travel control unit 16 generates control command values and the like for tracking the host vehicle's traveling trajectory based on each of the information in the vehicle information data group 31, the road environment data group 32, the sensor recognition data group 33, and the trajectory data group 36. Then, a process is performed to generate the traveling control data group 37 from the generated host vehicle's traveling trajectory and control command values, which is stored in the memory unit 30. Then the traveling control data group 37 is passed to the information output unit 17.

The information output unit 17 outputs a control command value to the actuator group 7 based on the traveling control data group 37. In addition, based on each of the information from the sensor recognition data group 33, the candidate area data group 34, the action plan data group 35, the trajectory data group 36, and the traveling control data group 37, the information output unit 17 outputs presentation information to the HMI apparatus group 8 to present information such as the traveling environment around the host vehicle, the traveling action plan being executed, and the traveling trajectory to the occupants of the host vehicle.

### [Description of Action Plan Data Group]

Next, an example of the action plan data group 34 will be described. Fig. 3a illustrates an example of the action plan data group 34 called a traveling action plan, which includes information about the host vehicle and an oncoming vehicle. The traveling action plan also includes the traveling action plan for the oncoming vehicle, making it a cooperative traveling action plan for the host vehicle and the oncoming vehicle. Fig. 3b also illustrates an example of a traveling action plan for the host vehicle, which is part of the cooperative action plan illustrated in Fig. 3a.

The overall traveling action plan illustrated in Fig. 3a includes the traveling action of the host vehicle and an oncoming vehicle. However, the processing (particularly the update process of the action plan update unit 15) of this embodiment does not depend on the traveling action plan for the oncoming vehicle. Therefore, the following describes the case where the traveling action plan (host vehicle action plan) of the host vehicle illustrated in Fig. 3b is used.

In the action plan data group 34 in Fig. 3a, each row represents one action step. As described above, an action step is a traveling action performed by the host vehicle or an oncoming vehicle, and the overall traveling action plan is made up of a combination of these action steps. By executing all the action steps in order, it is possible to eliminate difficult traveling situations such as passing each other.

These action steps and the order in which they are executed may be determined, for example, based on an algorithm that utilizes the positional relationship between the host vehicle's position, the oncoming vehicle's position, and the passable area, or may be determined by referring to a database in which several patterns are predefined.

The traveling action plan is composed of, for example, as illustrated in Fig. 3A,
(1) Overall action sequence 301 (displayed as 1 to 4) of the traveling action to be performed cooperatively by the vehicle and the oncoming vehicle,
(2) Vehicle ID 302 (displayed as 400 (oncoming vehicle), 2 (own vehicle)) corresponding to each action step,
(3) Traveling action sequence 303 (displayed as 1, 2) corresponding to each vehicle ID,
(4) Determination condition 304 (displayed by the specific traveling state of the vehicle) for determining that the execution of each action step is completed,
(5) When there are a plurality of passable area candidates, identifier 305 (displayed as A) of the target passable area used for this traveling action, and
(6) Flag 306 (displayed as YES, NO / applies only to action steps for the host vehicle, when YES, the associated control program is executed, when NO, the execution of the associated control program is stopped) for each action step to indicate the currently executed action step.

When the cooperated traveling action plan illustrated in Fig. 3a is updated by the action plan update unit 15 due to the satisfaction of the determination condition 304, for example, the value (data indicating the area) of the target passable area 305 and a flag included in the currently executed action step 306 are updated to a value indicating another target passable area, and a flag indicating the currently executed action step is updated to a flag indicating the next action step.

The host vehicle action plan illustrated in Fig. 3b is a traveling action plan that extracts only the action steps whose vehicle ID 302 corresponds to the host vehicle, which are included in the cooperated traveling cooperative action plan illustrated in Fig. 3a. The host vehicle action plan is, for example, a representation of the action plan data group 34 excluding the overall action sequence 301 and the vehicle ID 302, and is a representation used in the description of the embodiment of the invention.

### [Description of Passable Area]

Figs. 4a and 4b illustrates examples of passable areas included in the candidate area data group 34. Fig. 4a illustrates an example where there is one passable area in a narrow road, and Fig. 4b illustrates an example where there are a plurality of passable areas. Therefore, when there are a plurality of passable areas as in Fig. 4b, the appropriate area will be selected.

Fig. 4a illustrates a situation in which the host vehicle 2 is traveling on a narrow road 401, an oncoming vehicle 400 is traveling on a narrow road 403, and the two vehicles encounter each other facing each other. Between the host vehicle 2 and the oncoming vehicle 400, there is a road area 402 that is wide enough for both vehicles to pass. Within that area, a passable area candidate 404 is set that includes a place to which the host vehicle 2 can escape. Using this passable area candidate 404, the host vehicle 2 and the oncoming vehicle 400 can pass each other on the narrow road and travel independently.

Fig. 4b illustrates a situation in which the host vehicle 2 is traveling on a narrow road 405 and the oncoming vehicle 400 is traveling on a narrow road 409, as in Fig. 4a, and the two vehicles encounter each other facing each other. However, in Fig. 4b, there are two passable area candidates 406 and 408 between the host vehicle 2 and the oncoming vehicle 400, each of which is wide enough for both vehicles to pass through, and they are separated by a narrow road area 407.

Therefore, in this case, a passable area candidate 404A and a passable area candidate 404B are set. Then, using either the passable area candidate 404A or the passable area candidate 404B, the host vehicle 2 and the oncoming vehicle 400 can pass each other on the narrow road and travel independently.

In the examples illustrated in Figs. 4a and 4b, the passable area is between the host vehicle 2 and the oncoming vehicle 400, but it may be set behind the host vehicle 2 or behind the oncoming vehicle 400. In this case, one of the vehicles can retreat into the passable area behind it, allowing the vehicles to pass each other on the narrow road.

### [Description of Control Flow of Action Plan Update Process]

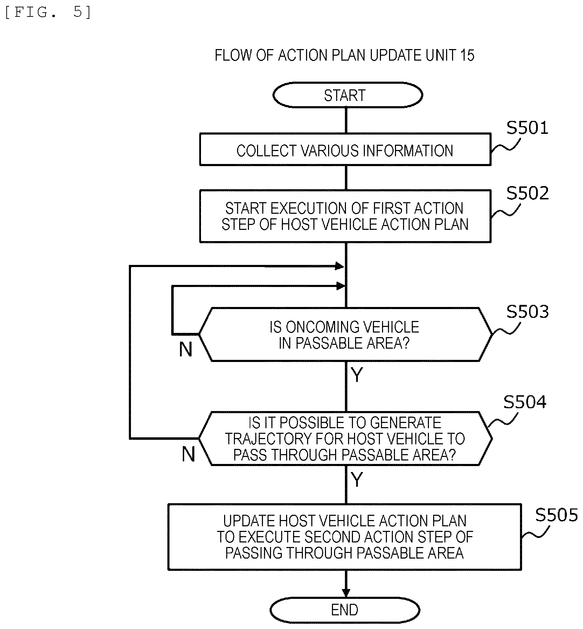

Next, an action step update process executed by the action plan update unit 15 of the vehicle control apparatus 3 will be described with reference to Fig. 5. In this case, the update of the two action steps illustrated in Fig. 3b is taken as an example, and the action sequence "1" is the first action step, and the action sequence "2" is the second action step.

### <<Step S501>>

In step S501, data necessary for the update process of the action plan update unit 15 is collected. The data necessary for the update process are the sensor recognition information data group 33 acquired by the information acquisition unit 11, the candidate area data group 34 determined by the candidate area determination unit 12, the action plan data group 35 determined by the action plan determination unit 13, and the trajectory data group 36 generated by the trajectory determination unit 14. When data collection is completed, the process proceeds to step S502.

### <<Step S502>>

In step S502, execution of the first action step of the action plan of the host vehicle, which is included in the action plan data group 35, is started. For example, when an end condition is set for the host vehicle, such as "stopping within a passable area", the first step of the action plan is for the host vehicle to begin taking action to achieve this condition, for example, by starting to travel toward a space in the passable area to which the host vehicle can escape. Once execution of the first action step is started, the process proceeds to step S503.

### <<Step S503>>

In step S503, images from a camera or the like are used to confirm whether an oncoming vehicle is present in the target passable area included in the action plan data group 35. Here, the presence of the oncoming vehicle in the passable area means that the oncoming vehicle is present in a location wide enough for both the oncoming vehicle and the host vehicle to pass each other, and the first condition for the oncoming vehicle and the host vehicle to pass each other is satisfied.

When the oncoming vehicle is not present in the passable area targeted by the traveling action plan, the process returns to step S503 and the host vehicle continues to monitor the above conditions while executing the current first action step. On the other hand, when the oncoming vehicle is present in the passable area targeted by the traveling action plan, the process proceeds to step S504.

### <<Step S504>>

In step S504, among the traveling trajectory point sequence included in the trajectory data group 36, the generation state of the traveling trajectory for the second action step to be executed by the host vehicle after the first action step currently being executed is confirmed.

Confirming the generation state of the traveling trajectory for the second action step means confirming the traveling trajectory for the second action step when the host vehicle is executing the first action step, and confirming whether the traveling trajectory generated by the trajectory data group 36 is generated without colliding with surrounding obstacles, or the like. Obstacles refer to, for example, stationary obstacles such as walls and curbs, and moving objects such as pedestrians, bicycles, and vehicles.

In step S504, when an end condition such as "passing through the passable area" is set, it is confirmed whether the host vehicle can travel through the passable area after the condition in step S503 that the oncoming vehicle is present in the passable area is satisfied. This can be determined by whether a traveling trajectory can be generated.

When the trajectory collides with an obstacle or the like and the end condition for the next second action step cannot be satisfied, the process returns to step S503 and moves to the condition confirmation process. On the other hand, when the trajectory does not collide with an obstacle and the end condition for the next second action step can be satisfied, the process moves to step S505.

### <<Step S505>>

In the final step S505, the action plan is updated so that the host vehicle executes the next second action step from the first action step currently being executed. Updating the action plan means updating the information contained in the action plan data group 35 illustrated in Fig. 3b and overwriting and storing it in the memory unit 30. In the case of the control flow illustrated in Fig. 5, the information to be updated is the flag information of the currently executed action step 306 in Fig. 3b.

In Fig. 3b, when the first action step is being executed in step S502, the flag information for the first action step is "YES" and the flag information for the second action step is "NO". On the other hand, in step S505, the flag information for the first action step is updated to "NO" and the flag information for the second action step is updated to "YES". Therefore, the second action step is executed instead of the first action step.

In addition, for example, when the candidate area data group 34 includes a plurality of passable areas as illustrated in Fig. 4b, the information of the target passable area 305 illustrated in Fig. 3b may also be updated in step S505 based on a change in the positional relationship between the host vehicle, the oncoming vehicle, and the passable areas.

### [First Operation Example: Description of Updating Action Plan in General Situation]

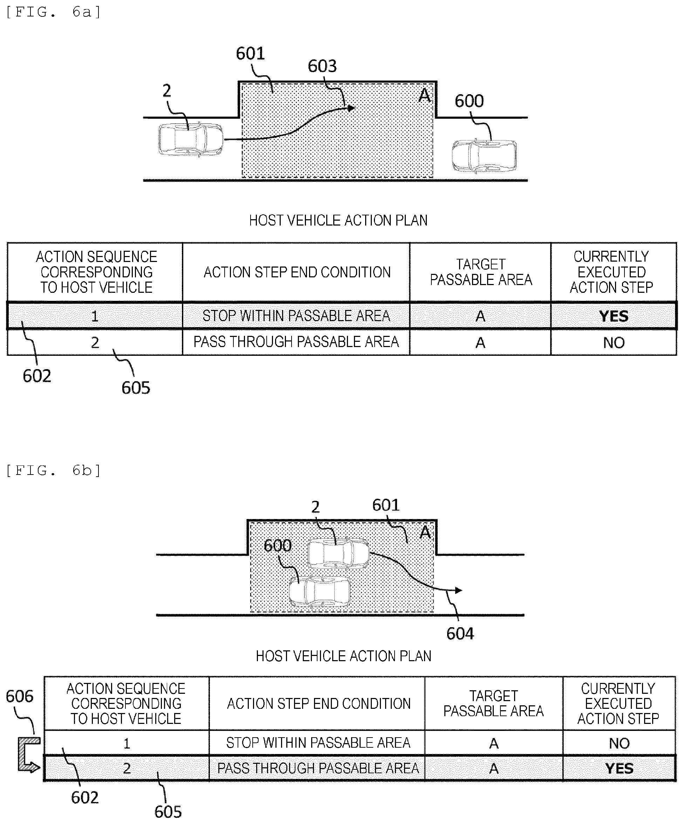

Next, the specific operation of an update process of the action plan update unit 15 described in Fig. 5 will be described using Fig. 6. In the example illustrated in Fig. 6, the traveling action plan of the host vehicle is composed of the two action steps illustrated in Fig. 3b, with Fig. 6a illustrating an example of executing a first action step 602, and Fig. 6b illustrating an example of updating to and executing a second action step 605. In other words, this shows the traveling action of the host vehicle passing an oncoming vehicle.

In Fig. 6a, the host vehicle 2 encounters an oncoming vehicle 600 on a narrow road. In step S501 in Fig. 5, information necessary to pass each other on the narrow road is collected. In step S502, the host vehicle 2 starts executing the first action step 602 in which the host vehicle 2 sets a passable area 601 as a target and escapes to the passable area 601. In addition, in the second action step 605, the flag information is "NO", and control corresponding to this second action step 605 is not executed.

Therefore, the first action step 602 is valid (YES flag information) as the currently executed action step. Then, a travel trajectory 603 is generated so that the host vehicle 2 moves into the passable area 601, and the host vehicle 2 leaves sufficient space for the oncoming vehicle 600.

The travel trajectory 603 may be generated, for example, by predicting the specific traveling action and traveling intentions of the oncoming vehicle 600 so as not to obstruct the passing path of the oncoming vehicle 600. Further, when included in the map information, the travel trajectory 603 may be generated so as to stop within an escaping area by using information and the like on an escaping area present within the passable area.

Fig. 6b illustrates a situation in which the host vehicle 2 executes the first action step 602 to reach the passable area 601 as a target, and then waits in this passable area 601 to allow the oncoming vehicle 600 to pass.

While the host vehicle 2 is performing the first action step 602, the determination condition of step S503 in Fig. 5 is used to determine whether the oncoming vehicle 600 is present within the passable area 601, and the determination condition of step S504 is used to determine whether the host vehicle 2 can generate a travel trajectory 604 that satisfies the next second action step 605. The host vehicle 2 performs a traveling action while continuing to monitor these two determination conditions.

Then, as a result of the traveling action, since the above two determination conditions are already satisfied in Fig. 6b, the process proceeds to step S505 in Fig. 5, where the second action step 605 is enabled and the action plan is updated. In Fig. 6b, the flag information of the first action step 602 is updated from "YES" to "NO", and the flag information of the second action step 605 is updated from "NO" to "YES" (that is, the "YES" flag information is transitioned from the action step 602 to the action step 605 as indicated by an arrow 606). Then, as soon as the flag information of the second action step 605 becomes enabled (YES), the host vehicle 2 starts traveling so as to follow the travel trajectory 604 that satisfies the second action step 605.

Incidentally, the timing of updating to the second action step 605 may be changed by adding traveling intention prediction information of the oncoming vehicle 600. For example, in the situation illustrated in Fig. 6a, when it is possible to predict the traveling intention of the oncoming vehicle 600 to back up and enter a parking space or the like at the side of a narrow road, the action plan may be updated so that it is updated after the oncoming vehicle 600 enters the parking space or the like, rather than the timing indicated in Fig. 6b. In this case, blinking information of turn signals or the like can be used as the traveling intention prediction information. In addition, the traveling intention prediction information can also be obtained by communicating (vehicle-to-vehicle communication) with the oncoming vehicle.

In this way, the vehicle control apparatus 3 can also be equipped with a behavior estimation unit (traveling intention prediction information estimation unit) that estimates the behavior (traveling intention prediction information) of oncoming vehicles (which may include bicycles, carts, and the like), and the action plan update unit 15 can decide whether to update the action plan depending on the estimation results of the behavior estimation unit.

Then, as soon as the host vehicle 2 satisfies the end condition of the second action step 605 (determination that the host vehicle 2 has passed through the passable area), the passing travel with the oncoming vehicle 600 is completed.

### [Second Operation Example: Description of Updating Action Plan in Unexpected Situation]

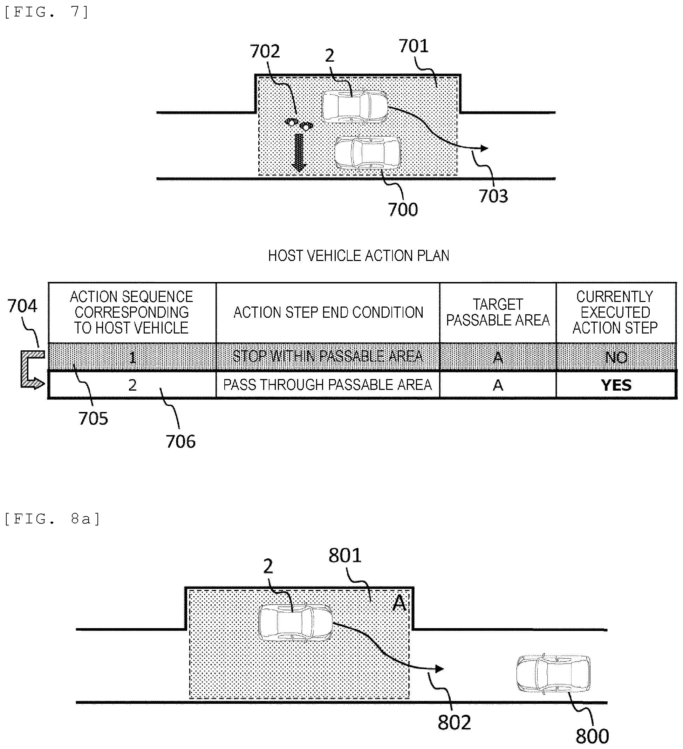

Next, using Fig. 7, another specific operation of an update process of the action plan update unit 15 described in Fig. 5 will be described. Fig. 7 illustrates an example of a case where another unexpected situation occurs when performing the update process described in Fig. 6b.

Fig. 7 illustrates a situation in which a pedestrian 702 crosses a narrow road behind the host vehicle 2 when an oncoming vehicle 700 is about to pass through a passable area 701 after the host vehicle 2 has escaped to the passable area 701.

When the pedestrian 702 crosses in front of the oncoming vehicle 700, the oncoming vehicle 700 is unable to travel through the passable area 701 and waits for the pedestrian 702 to cross the narrow road before transitioning to a traveling action. In contrast, the update process for the traveling action plan of the host vehicle 2 does not depend on the traveling action of the oncoming vehicle 700, and whether to update the action plan is determined based on the determination conditions in steps S503 and S504 in Fig. 5, so the action steps of the host vehicle 2 can be updated. This allows the host vehicle 2 to continue traveling smoothly.

In Fig. 7, the oncoming vehicle 700 is present within the passable area 701, so the determination condition in step S503 in Fig. 5 is satisfied. Further, in Fig. 7, the host vehicle 2 can generate a travel trajectory 703 of a next second action step 706, so the determination condition in step S504 is also satisfied. Since these two determination conditions are satisfied, in the update process of step S505, the action step being executed is updated from the first action step 705 to the second action step 706, as indicated by an arrow 704. It is also possible to delay the timing of updating the action step by, for example, acquiring traveling intention prediction information of the oncoming vehicle 700 via vehicle-to-vehicle communication or the like.

Fig. 7 describes a situation in which the appearance of the pedestrian 702 prevents the oncoming vehicle 700 from passing through the passable area, but the action steps may be updated based on other factors or a prediction of the intention of the factor. For example, when a following vehicle suddenly appears behind the host vehicle 2 instead of the pedestrian 702 and it is determined that the oncoming vehicle 700 cannot pass, the action steps of the host vehicle 2 and the timing of the update may be determined taking into account the traveling intention and positional relationship of the following vehicle, or the like.

Specifically, the action steps of the host vehicle 2 may be updated so that the host vehicle 2 and the oncoming vehicle 700 can be stopped in parallel. In this case, the escaping space for the host vehicle 2 can be determined based on the shape of the passable area.

### [Description for when Conditions for Updating Action Plan are not satisfied]

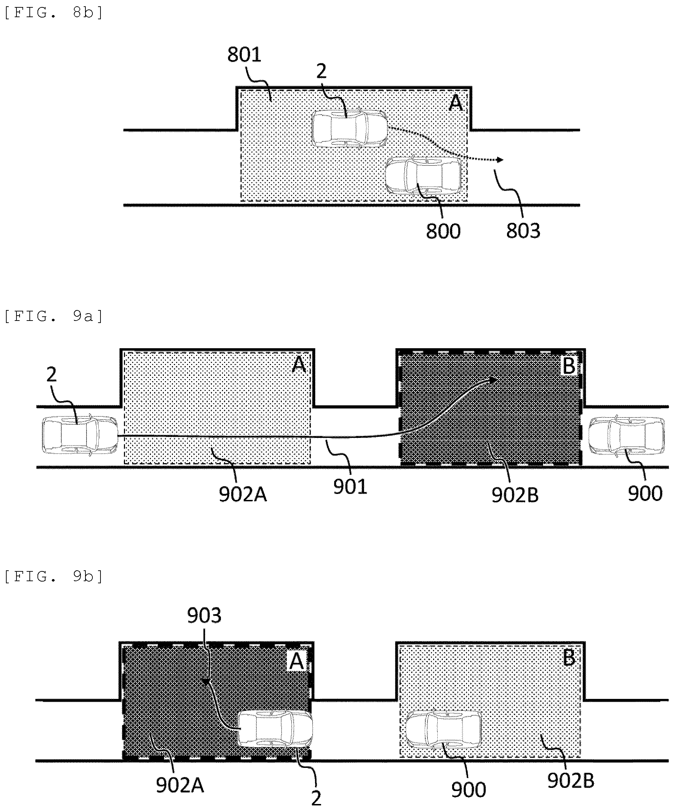

Next, using Fig. 8, another specific operation of the update process of the action plan update unit 15 described in Fig. 5 will be described. Fig. 8 illustrates an example of a case where a situation occurs in which the determination conditions in steps S503 and S504 in Fig. 5 are not satisfied.

Fig. 8a illustrates a situation in which the first action step included in the traveling action plan of the host vehicle 2 is being executed, and the host vehicle 2 is waiting in the passable area 801. In Fig. 8a, an oncoming vehicle 800 is traveling on a narrow road, but is unable to reach the passable area 801 and is not present within the passable area 801. As a result, the condition of step S503 in Fig. 5 is not satisfied, and the action plan is not updated.

The processing of step S504 is not executed. However, when it was executed, the condition of step S504 would be satisfied because a travel trajectory for passing through the passable area 801 of the host vehicle 2 would be able to be generated. However, in order to update the action plan, the two determination conditions of step S503 and step S504 must be satisfied, so no action step update would occur.

Fig. 8b is a continuation of Fig. 8a, and illustrates a situation in which the oncoming vehicle 800 is moving through the passable area 801. In this situation, the oncoming vehicle 800 is present within the passable area 801, so the determination condition of step S503 is satisfied. However, a travel trajectory 803 for the host vehicle 2 to pass through the passable area 801 is not generated correctly because it interferes with the oncoming vehicle 800, and the determination condition of step S504 is not satisfied. As a result, because the two conditions are not satisfied simultaneously, no update of the action plan occurs.

### [Description of Updating Action Plan when there are a plurality of Passable Area Candidates]

Next, using Fig. 9, another specific operation of the update process of the action plan update unit 15 described in Fig. 5 will be described. Fig. 9 illustrates an example in which a plurality of passable areas exist around the host vehicle 2, and a target passable area is updated while the vehicle is traveling.

In Fig. 9a, for example, based on the positional relationship between the host vehicle 2, an oncoming vehicle 900, a passable area 902A, and a passable area 902B, the action plan determination unit 13 determines an action plan for the host vehicle 2 to wait within the passable area 902B.

Then, in step S502 of Fig. 5, a first action step generates a travel trajectory 901 for traveling into the passable area 902B, and the host vehicle 2 starts traveling by following the travel trajectory 901. However, in this state, there are cases where the situation illustrated in Fig. 9b occurs.

In other words, this is the case where the host vehicle 2 and the oncoming vehicle 900 reach the exits of two passable areas 902A and 902B. In this state, there is a risk that they will not be able to pass each other.

Therefore, in Fig. 9b, for example, while the host vehicle 2 is traveling following the travel trajectory 901, it is determined that the oncoming vehicle 900 has passed through the passable area 902B based on the positional relationship between the oncoming vehicle 900 and the passable area 902B. In that case, the target passable area (see Fig. 3b) in the action plan of the host vehicle 2 may be updated from "902B" to "902A".

This changes the target passable area of the first action step currently being executed by the host vehicle 2, and generates a travel trajectory 903 for satisfying the end condition of the action step, "stop within passable area" (see Fig. 3b). In this case, for example, as illustrated in Fig. 9b, the host vehicle 2 may travel backward to follow the travel trajectory 903.

Further, in order to satisfy the end condition of the action step as described above, for example, it is possible to use predicted information of oncoming vehicles, etc., to determine the stopping position and posture of the vehicle so as not to impede the oncoming vehicle, and to generate a driving trajectory to achieve that position and posture (e.g., stopping diagonally).

The embodiment described above is an example, and the invention is not limited to this. In other words, the invention has various applications, and all embodiments are included in the scope of the invention. For example, in the above embodiment, the passable area is a road area wide enough for the host vehicle and an oncoming vehicle to pass through, so in some cases an intersection, a subsidiary road, or part of a sidewalk may be used to determine the passable area.

For example, in the above embodiment, the end condition of the action step of the host vehicle may be a point indicated in a geographic coordinate system, or may be an area expressed in coordinates relative to the host vehicle.

For example, in the above embodiment, the passable area may be constantly searched for and stored during normal traveling, and when an oncoming vehicle is encountered in the future, the passable area that has been stored in advance may be used to determine whether to update the action plan and to generate a trajectory.

For example, in the above embodiment, the external communication apparatus 9 may be used to communicate with an oncoming vehicle using wireless communication means or the like to understand the traveling intention of the oncoming vehicle and notify the oncoming vehicle of the waiting intention of the host vehicle.

For example, in the above embodiment, when traveling into or exiting a passable area, the host vehicle may communicate its intention to travel to the target oncoming vehicle or nearby oncoming vehicles using visual means such as a turn signal or auditory means such as voice.

For example, in the above embodiment, in order to convey the traveling intention and notices to a user riding in the vehicle, drawings, text, or the like may be output via the HMI apparatus group 8.

The invention is not limited to the above-described embodiments, and includes various modification examples. The above-described embodiments are described in detail to clearly explain the invention, and are not necessarily limited to those having all of the configurations described. It is also possible to replace part of the configuration of one embodiment with the configuration of another embodiment, and it is also possible to add the configuration of another embodiment to the configuration of one embodiment. It is also possible to add, delete, or replace other configurations with respect to the configuration of each embodiment.

### Reference Signs List

1: vehicle system
2: vehicle
3: vehicle control apparatus
4: external sensor group
5: vehicle sensor group
6: map information management apparatus
7: actuator group
8: HMI apparatus group
9: external communication apparatus
10: processing unit
11: information acquisition unit
12: candidate area determination unit
13: action plan determination unit
14: trajectory determination unit
15: action plan update unit
16: travel control unit
17: information output unit
30: memory unit
31: vehicle information data group
32: road environment data group
33: sensor recognition data group
34: candidate area data group
35: action plan data group
36: trajectory data group
37: traveling control data group
40: communication unit
N: in-vehicle network

## Claims

1. A vehicle control apparatus, comprising:
a candidate area determination unit that determines a passable area, which is an area where a host vehicle and a moving object around the host vehicle can pass each other, on a road where there is an area where the host vehicle and the moving object cannot pass each other;
an action plan determination unit that determines an action plan indicating a sequence of action steps of the host vehicle;
a trajectory generation unit that generates a travel trajectory of the host vehicle in the passable area;
an action plan update unit that can update the action plan based on a position of the moving object within the passable area and a travel trajectory of the host vehicle generated by the trajectory generation unit; and
a travel control unit that controls travel of the host vehicle according to the action plan.

2. The vehicle control apparatus according to claim 1, wherein
the action plan update unit updates the action plan using a travel trajectory when the moving object is present within the passable area and the host vehicle is capable of generating the travel trajectory for exiting the passable area.

3. The vehicle control apparatus according to claim 2, wherein
the action plan update unit updates the action plan so that an action step of the host vehicle traveling along a travel trajectory generated by the trajectory generation unit and exiting the passable area is set as an action step to be executed next to an action step currently being executed.

4. The vehicle control apparatus according to claim 1, wherein
when the candidate area determination unit determines a plurality of passable areas, the action plan update unit determines whether to update the action plan by using a passable area among the plurality of passable areas through which the host vehicle and the moving object pass each other.

5. The vehicle control apparatus according to claim 1, wherein
a behavior estimation unit that estimates a behavior of at least one of the moving object and a surrounding object of the host vehicle is further provided, and
the action plan update unit determines whether to update the action plan depending on an estimation result of the behavior estimation unit.

6. A vehicle control apparatus that sets a traveling action when a host vehicle travels along a narrow road on which the host vehicle and an oncoming vehicle cannot travel in opposite directions at the same time, wherein
the vehicle control apparatus includes at least,
a candidate area determination unit that determines a passable area that exists on the narrow road and is an area where the host vehicle and the oncoming vehicle can pass each other,
an action plan determination unit that sets the traveling action of the host vehicle and determines an action plan including a plurality of action steps in which an execution order of the traveling action is set,
a travel trajectory generation unit that generates a travel trajectory of the host vehicle from the host vehicle to the passable area and beyond the passable area,
an action plan update unit that updates the action step up to the passable area to the action step beyond the passable area when a first condition that the oncoming vehicle is present in the passable area and a second condition that the travel trajectory of the host vehicle beyond the passable area can be generated are satisfied by execution of the action steps, and
a travel control unit that performs the travel action of the host vehicle according to the updated action step.

7. A vehicle control method for a vehicle control apparatus that sets a traveling action when a host vehicle travels along a narrow road on which the host vehicle and an oncoming vehicle cannot travel in opposite directions at the same time, wherein
the vehicle control apparatus executes,
determining a passable area that exists on the narrow road and is an area where the host vehicle and the oncoming vehicle can pass each other,
setting the traveling action of the host vehicle and determining an action plan including a plurality of action steps in which an execution order of the traveling action is set,
generating a travel trajectory of the host vehicle from the host vehicle to the passable area and beyond the passable area,
updating the action step up to the passable area to the action step beyond the passable area when a first condition that the oncoming vehicle is present in the passable area and a second condition that the travel trajectory of the host vehicle beyond the passable area can be generated are satisfied by execution of the action steps, and
and performing the travel action of the host vehicle according to the updated action step.
